# EUROPEAN PATENT APPLICATION

(11) **EP 4 636 995 A1**
(43) Date of publication of application: **22.10.2025**
(21) Application number: 23902711.3
(22) Date of filing: 12.12.2023
(51) Int. Cl.: H02K 1/32

(54) **ROTOR COOLING STRUCTURE, ROTOR, AND MOTOR**

(30) Priority: 12.12.2022 CN 202223335658 U
(71) Applicant: XPT EDS (Hefei) Co., Ltd., Hefei City, Anhui 230601 (CN)
(72) Inventor: LI, Jiebao, Shanghai 201804 (CN); LI, Yuejiao, Shanghai 201804 (CN); WANG, Di, Shanghai 201804 (CN); DING, Chen, Shanghai 201804 (CN); XU, Shilong, Shanghai 201804 (CN)
(74) Representative: Vossius & Partner Patentanwälte Rechtsanwälte mbB
(86) International application number: PCT/CN2023/138213
(87) International publication number: WO 2024/125515

(57) **Abstract**

The invention relates to the technical field of cooling of motors, and particularly provides a rotor cooling structure, a rotor, and a motor, which aim to solve the problem that an existing rotor cooling structure cannot effectively reduce the temperature of magnetic steel. To this end, the rotor cooling structure of the invention includes: a rotor shaft, where a first channel is formed in the rotor shaft, a first end of the first channel being in communication with an outlet of a coolant supply device; a special-shaped core, where a second channel is formed in the special-shaped core, a first end of the second channel being in communication with a second end of the first channel; and rotor cores connected to the special-shaped core and sleeved on the rotor shaft, where third channels are formed in each of the rotor cores, first ends of the third channels being in communication with a second end of the second channel, and second ends of the third channels being in communication with an inlet of the coolant supply device. By means of the above structural configuration, a coolant can be introduced into the rotor cores as close to the magnetic steel as possible, which can effectively prevent the magnetic steel from a demagnetization failure caused by excess temperature, thereby ensuring the reliability of the motor.

## Description

The invention claims priority to Chinese Patent Application No. CN 202223335658.7, filed on December 12, 2022, and entitled "ROTOR COOLING STRUCTURE, ROTOR, AND MOTOR", which is incorporated herein by reference in its entirety.

### Technical Field

The invention relates to the technical field of cooling of motors, and particularly provides a rotor cooling structure, a rotor, and a motor.

### Background Art

The rapid development of vehicles such as new energy vehicles comes with increasingly high requirements raised by the new energy vehicles on motor power density and motor efficiency, and a driving motor for the new energy vehicles is required to have a higher peak torque and motor efficiency with a smaller size. However, the motor generates a large amount of heat during operation, and a problem of heating up of the motor is becoming increasingly prominent. Magnetic steel inside the motor is highly sensitive to an operating temperature. If the heat is not dissipated promptly, the magnetic steel will be overheated, and the magnetic performance of the magnetic steel may drastically deteriorate, which may lead to serious performance degradation of the motor and even result in permanent demagnetization of the magnetic steel.

Currently, two types of rotor cooling structures of a driving motor for a vehicle are mainly included: air cooling and water cooling. In an air cooling structure, fan blades are mounted at an end of a rotor shaft, the rotation of the fan blades causes high-speed circulation of air on a surface of a rotor, to carry away heat from the surface of the rotor, thereby cooling the rotor. In a water cooling structure, blind holes are formed in a rotor shaft from the bottom of the rotor shaft up to the top of the rotor so that cold water is introduced into the holes in the rotor shaft, and hot water flows out, thereby cooling the rotor from inside. However, in existing rotors, it is difficult to design the air cooling structure and the water cooling structure close to magnetic steel, and heat of the magnetic steel cannot be effectively carried away, which causes a demagnetization failure of the magnetic steel due to excess temperature.

Therefore, there is a need for a novel technical solution in the art to solve the problem described above.

### Summary

The invention aims to solve the technical problem described above, that is, to solve the problem that an existing rotor cooling structure cannot effectively reduce the temperature of magnetic steel.

In a first aspect, the invention provides a rotor cooling structure. The rotor cooling structure includes: a rotor shaft, where a first channel is formed in the rotor shaft, a first end of the first channel being in communication with an outlet of a coolant supply device; and rotor cores sleeved on the rotor shaft, where third channels and magnetic steel slots are formed in each of the rotor cores, first ends of the third channels being in communication with a second end of the first channel, and second ends of the third channels being in communication with an inlet of the coolant supply device.

In a preferred technical solution of the above rotor cooling structure, the rotor cooling structure further includes a special-shaped core sleeved on the rotor shaft, where a second channel is formed in the special-shaped core, a first end of the second channel being in communication with the second end of the first channel, and a second end of the second channel being in communication with the first ends of the third channels.

In a preferred technical solution of the above rotor cooling structure, the first channel includes a first passage, a first end of the first passage being in communication with the outlet of the coolant supply device, and a second end of the first passage being in communication with the first end of the second channel.

In a preferred technical solution of the above rotor cooling structure, the first channel further includes a second passage radially formed on an outer peripheral side of the rotor shaft and having a first end in communication with the second end of the first passage and a second end in communication with the first end of the second channel, and the first passage is disposed along an axis of the rotor shaft; or the first passage is obliquely disposed so that the second end of the first passage is in communication with the first end of the second channel.

In a preferred technical solution of the above rotor cooling structure, a rotor core is disposed at each of two ends of the special-shaped core.

In a preferred technical solution of the above rotor cooling structure, the first end of the second channel is in communication with a first shaft hole that is formed in the special-shaped core and that is connected to the rotor shaft, to enable a coolant in the first channel to enter the second channel, and two second ends of the second channel that extend in an axial direction of the special-shaped core each are in communication with the first ends of the third channels in each of the rotor cores.

In a preferred technical solution of the above rotor cooling structure, the third channel includes heat dissipation holes disposed in an axial direction of the rotor cores, a first end of each of the heat dissipation holes being in communication with the second end of the second channel, and a second end of each of the heat dissipation holes being in communication with the inlet of the coolant supply device; and/or the third channel includes weight-reducing holes disposed in the axial direction of the rotor cores, a first end of each of the weight-reducing holes being in communication with the second end of the second channel, and a second end of each of the weight-reducing holes being in communication with the inlet of the coolant supply device.

In a preferred technical solution of the above rotor cooling structure, each of the rotor core is formed by laminating a plurality of rotor laminations; and/or the special-shaped core is formed by laminating a plurality of special-shaped laminations; and/or the special-shaped core is connected to the rotor cores by stamping.

In a second aspect, the invention provides a rotor. The rotor includes a rotor cooling structure according to any one of the above preferred technical solutions.

In a third aspect, the invention provides a motor. The motor includes a rotor cooling structure or a rotor according to any one of the above preferred technical solutions.

A rotor cooling structure of the invention includes: a rotor shaft, where a first channel is formed in the rotor shaft, a first end of the first channel being in communication with an outlet of a coolant supply device; a special-shaped core, where a second channel is formed in the special-shaped core, a first end of the second channel being in communication with a second end of the first channel; and rotor cores connected to the special-shaped core and sleeved on the rotor shaft, where third channels are formed in each of the rotor cores, first ends of the third channels being in communication with a second end of the second channel, and second ends of the third channels being in communication with an inlet of the coolant supply device. The third channels are formed in each of the rotor cores, and the third channels are in communication with the first channel in the rotor shaft so that a coolant can enter the third channels through the first channel; and as magnetic steel slots and the third channels are both formed in each of the rotor cores, the coolant in the third channels can be as close to the magnetic steel slots as possible, to facilitate cooling of magnetic steel in the magnetic steel slots, and improve an effect of cooling the magnetic steel, thereby effectively preventing the magnetic steel from a demagnetization failure caused by excess temperature, and ensuring the reliability of a motor.

Further, a rotor core is disposed at each of two ends of the special-shaped core so that the coolant can be distributed uniformly in the rotor cores, to improve heat dissipation efficiency to a certain extent, thereby ensuring that the rotor cores are at the same temperature, and prolonging the lifetimes of the rotor cores.

Further, the third channel includes heat dissipation holes disposed in an axial direction of the rotor cores, a first end of each of the heat dissipation holes being in communication with the second end of the second channel, and a second end of each of the heat dissipation holes being in communication with the inlet of the coolant supply device; and/or the third channel includes weight-reducing holes disposed in the axial direction of the rotor cores, a first end of each of the weight-reducing holes being in communication with the second end of the second channel, and a second end of each of the weight-reducing holes being in communication with the inlet of the coolant supply device. As the heat dissipation holes and the weight-reducing holes are disposed, the coolant can be introduced into the rotor cores, to cool the rotor cores, thereby prolonging the lifetimes of the rotor cores; in addition, as the weight-reducing holes are disposed, the weights of the rotor cores are reduced so that a rotational speed of the rotor cores is increased, thereby improving operating efficiency while reducing the costs of manufacturing a rotor core.

Further, each of the rotor cores is formed by laminating a plurality of rotor laminations; and/or the special-shaped core is formed by laminating a plurality of special-shaped laminations; and/or the special-shaped core is connected to the rotor cores by laminating, to reduce eddy current losses and ensure the strength of the rotor.

### Brief Description of the Drawings

Preferred implementations of the invention are described below with reference to the accompanying drawings, in which:
FIG. 1 is a schematic structural diagram of a rotor cooling structure of the invention, in which flow directions of a coolant are indicated by arrows;
FIG. 2 is a structural diagram of a rotor lamination of the invention;
FIG. 3 is a first structural diagram of a special-shaped lamination of the invention; and
FIG. 4 is a second structural diagram of a special-shaped lamination of the invention.

List of reference signs:
1. Rotor shaft; 11. First channel; 12. First passage; 13. Second passage; 14. First shaft hole;
2. Special-shaped core; 21. Second channel; 22. Special-shaped lamination;
3. Rotor core; 31. Third channel; 32. Magnetic steel slot; 33. Heat dissipation hole; 34. Weight-reducing hole; 35. Rotor lamination.

### Detailed Description of Embodiments

Preferred implementations of the invention will be described below with reference to the accompanying drawings. Those skilled in the art should understand that these implementations are merely used to explain the technical principles of the invention, and are not intended to limit the scope of protection of the invention. For example, although a heat dissipation hole in a rotor lamination of the invention is described as being circular, the technical solution of the invention is not limited thereto, and the heat dissipation hole in the rotor lamination of the invention may also be configured in another shape such as a triangular shape or a rectangular shape, provided that a heat dissipation requirement can be met. This change does not depart from the principle and scope of the invention.

It should be noted that, in the description of the invention, the terms such as "upper", "lower", "left", "right", "top", "bottom", "front", and "back" that indicate directions or positional relationships are based on the directions or positional relationships shown in the figures, which are merely for ease of description, rather than to indicate or imply that a device or an element must have a specific orientation, or be constructed and operated in a specific orientation. Therefore, these terms should not be construed as limiting the invention. In addition, the terms "first", "second", and "third" are for descriptive purposes only, and should not be construed as indicating or implying relative importance.

In addition, it should also be noted that, in the description of the invention, the terms "connect", "dispose", and "mount" should be interpreted in a broad sense unless explicitly defined and limited otherwise, which, for example, may be a fixed connection, a detachable connection, or an integral connection; or may be a mechanical connection, a direct connection, or an indirect connection through an intermediate medium. For those skilled in the art, the specific meanings of the above terms in the invention can be interpreted according to a specific situation.

As described in the background art, it is difficult to design an existing rotor cooling structure close to magnetic steel, and heat of the magnetic steel cannot be effectively carried away, which causes a demagnetization failure of the magnetic steel due to excess temperature. The invention provides a rotor cooling structure, which aims to solve the problem that an existing rotor cooling structure cannot effectively reduce the temperature of magnetic steel. By means of a through hole in a special-shaped core, the rotor shaft is connected to a through hole formed close to the magnetic steel, to form a coolant channel, and introduce a coolant into the vicinity of the magnetic steel, thereby effectively preventing the magnetic steel from a demagnetization failure caused by excess temperature, and ensuring the reliability of a motor.

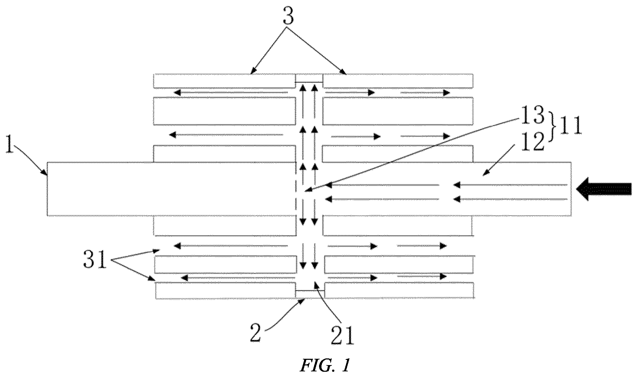

Referring first to FIG. 1, a rotor cooling structure of the invention is described. FIG. 1 is a schematic structural diagram of the rotor cooling structure of the invention.

As shown in FIG. 1, the rotor cooling structure of the invention includes a rotor shaft 1, a special-shaped core 2, and rotor cores 3. A first channel 11 is formed in the rotor shaft 1, a first end of the first channel 11 being in communication with an outlet of a coolant supply device (not shown); a second channel 21 is formed in the special-shaped core 2, a first end of the second channel 21 being in communication with a second end of the first channel 11; the rotor cores 3 are connected to the special-shaped core 2 and are sleeved on the rotor shaft 1; and third channels 31 are formed in each of the rotor cores 3, first ends of the third channels 31 being in communication with a second end of the second channel 21, and second ends of the third channels 31 being in communication with an inlet of the coolant supply device. In some embodiments, the coolant supply device can be an oil pump.

It should be noted that the type of a coolant is not limited in the invention, and the coolant can be ATF oil, etc., provided that the heat of magnetic steel of the rotor cores 3 can be carried away.

Preferably, as shown in FIG. 1, the first channel 11 includes a first passage 12 and a second passage 13, where a first end (i.e., an end on the right side of the paper in FIG. 1) of the first passage 12 is in communication with the outlet of the coolant supply device, a second end (i.e., an end on the left side of the paper in FIG. 1) of the first passage 12 is in communication with a first end (i.e., an end on the right side of the paper in FIG. 1) of the second passage 13, and second ends (i.e., two ends on the upper side and the lower side of the paper in FIG. 1) of the second passage 13 are in communication with first ends (i.e., two ends on the upper side and the lower side of the paper in FIG. 1) of the second channel 21.

Preferably, the first passage 12 is disposed along an axis of the rotor shaft 1, the second passage 13 is radially formed on an outer peripheral side of the rotor shaft 1, and the second end of the first passage 12 is in communication with the first end of the second passage 13 so that the coolant can flow from the first passage 12 into the second passage 13.

Alternatively, in an alternative implementation, the first channel 11 includes only the first passage 12, and the first passage 12 is obliquely disposed in the rotor shaft 1 so that the second end of the first passage 12 is in direct communication with the first end of the second channel 21, and the coolant can directly flow from the first passage 12 into the second channel 21.

Preferably, a specified length of the first channel 11 in the rotor shaft 1 extends from a first end (i.e., an end on the right side of the paper in FIG. 1) of the rotor shaft 1 to a position (i.e., the right end on the left side of the paper in FIG. 1, shown by a dashed line) corresponding to a second end of the special-shaped core 2, and the coolant is maximally introduced into the second channel 21, to improve cooling efficiency.

Of course, a specified length of the first passage 12 in the rotor shaft 1 may also extend from the first end of the rotor shaft 1 to anywhere on the rotor shaft 1. In this case, the second passage 13 may be radially or obliquely disposed, provided that the coolant can be introduced into the second channel 21.

Preferably, as shown in FIG. 1, the special-shaped core 2 is disposed between two rotor cores 3 to enable the coolant in the special-shaped core 2 to enter both of the rotor cores 3 and cool both of the two rotor cores 3 on both sides of the special-shaped core 2 so that the two rotor cores 3 are cooled uniformly, thereby improving heat dissipation efficiency, ensuring that the rotor cores 3 are at the same temperature, and prolonging the lifetimes of the rotor cores 3.

It can be understood that those skilled in the art can flexibly adjust arrangements of the special-shaped core 2 and the rotor cores 3. For example, the two rotor cores 3 are disposed side by side, and the special-shaped core 2 is disposed on the left or right side of the rotor cores 3, provided that the coolant can enter the rotor cores 3 through the special-shaped core 2 to cool the rotor cores 3.

Preferably, the first end of the second channel 21 is in communication with a first shaft hole 14 that is formed in the special-shaped core 2 and that is connected to the rotor shaft 1, to enable the coolant in the first channel 11 to enter the second channel 21, and the two second ends of the second channel 21 that extend in an axial direction of the special-shaped core 2 each are in communication with the first ends of the third channels 31 in each of the rotor cores 3.

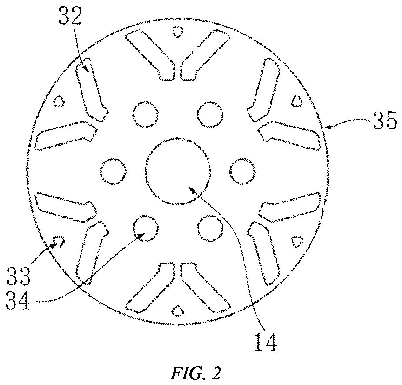

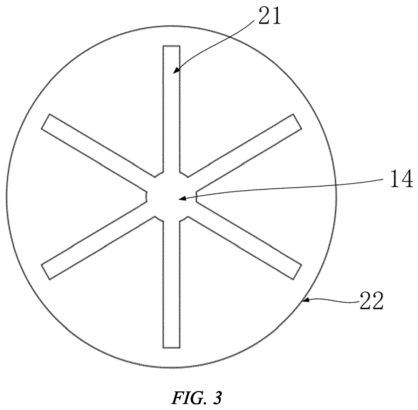

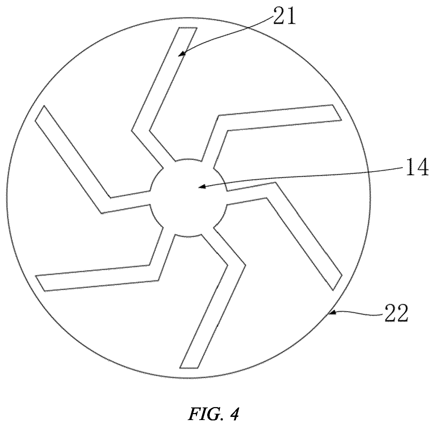

Referring to FIG. 1 to FIG. 4, a rotor lamination and a special-shaped lamination of the invention are described below. FIG. 2 is a structural diagram of the rotor lamination of the invention; FIG. 3 is a first structural diagram 1 of the special-shaped lamination of the invention; and FIG. 4 is a second structural diagram of the special-shaped lamination of the invention.

It should be noted that each of the rotor cores 3 is formed by laminating a plurality of rotor laminations 35, the special-shaped core 2 is formed by laminating a plurality of special-shaped laminations 22, and the special-shaped core 2 is connected to the rotor cores 3 by laminating, to reduce eddy current losses and ensure the strength of the rotor.

Preferably, as shown in FIG. 1 and FIG. 2, the third channel 31 includes heat dissipation holes 33 and weight-reducing holes 34 which are both disposed in an axial direction of the rotor cores 3, first ends of both the heat dissipation holes 33 and the weight-reducing holes 34 each being in communication with the second end of the second channel 21, and second ends of both the heat dissipation holes 33 and the weight-reducing holes 34 each being in communication with the inlet of the coolant supply device.

Alternatively, the third channel 31 includes only heat dissipation holes 33 disposed in the axial direction of the rotor cores 3, first ends of the heat dissipation holes 33 being in communication with the second end of the second channel 21, and second ends of the heat dissipation holes 33 being in communication with the inlet of the coolant supply device. Still alternatively, the third channel includes only weight-reducing holes 34 disposed in the axial direction of the rotor cores 3, first ends of the weight-reducing holes 34 being in communication with the second end of the second channel 21, and second end of the weight-reducing holes 34 being in communication with the inlet of the coolant supply device.

Preferably, the heat dissipation holes 33 and the weight-reducing holes 34 are both circular in shape. Of course, the heat dissipation holes 33 and the weight-reducing holes 34 may alternatively be configured in another shape such as a rectangular shape, a triangular shape, or an elliptic shape.

As shown in FIG. 2, magnetic steel slots 32 are formed in each of the rotor laminations 35, the magnetic steel is fixed in the magnetic steel slots 32, and the magnetic steel slots 32 are disposed close to the third channels 31 so that the coolant in the third channels 31 can effectively carry away the heat of the magnetic steel, thereby preventing the magnetic steel from a demagnetization failure caused by excess temperature, and ensuring the reliability of a motor.

Preferably, the magnetic steel slots 32 are disposed circumferentially around the outside of the rotor lamination 35 and are arranged in "V" shapes.

It should be note that specified positions of both the heat dissipation holes 33 and the weight-reducing holes 34 in the rotor lamination 35 are not limited in the invention, provided that the coolant can carry away the heat of the magnetic steel.

As shown in FIG. 2, the first shaft hole 14 is disposed at the center of each rotor lamination 35. During manufacturing of a rotor core 3, the first shaft holes 14, the third channels 31, and the magnetic steel slots 32 in all the rotor laminations 35 are respectively axially coincided, and are laminated to form the rotor core 3.

As shown in FIG. 3 and FIG. 4, the first shaft hole 14 is disposed at the center of each special-shaped lamination 22. During manufacturing of a special-shaped core 2, the first shaft holes 14 and the second channels 21 in all the special-shaped laminations 22 are respectively axially coincided, and are laminated to form the special-shaped core 2.

It should be note that the structure of the special-shaped lamination 22 is not limited to the two enumerations in FIG. 3 and FIG. 4, which are merely exemplary but not limiting. In practical application, the second channel 21 in the special-shaped lamination 22 may alternatively be of a "Y"-shaped bifurcated structure, provided that the second channel 21 can be in communication with the third channels 31 so that the coolant can flow into the third channels 31. Those skilled in the art can adjust and configure the shape of the second channel 21 according to an actual product requirement.

Preferably, the first shaft holes 14 in the rotor cores 3 and the special-shaped core 2 are axially coincided and are connected by stamping to form a rotor, and the rotor is sleeved on the rotor shaft 1 by means of the first shaft holes 14.

Referring to FIG. 1, a cooling loop of the rotor cooling structure of the invention is described below.

As shown in FIG. 1, arrow directions are flowing directions of the coolant. The coolant flows out of the outlet of the coolant supply device, first enters the first passage 12, then enters the second passage 13, and separately flows from an upper second end and a lower second end of the second passage 13 into the second channel 21. Part of the coolant entering the second channel 21 separately flows into the third channels 31 from the left side and the right side. Finally, the coolant flows out of the second ends of the third channels 31 and flows into the coolant supply device through the inlet of the coolant supply device, thereby forming the cooling loop to reduce the temperature of the rotor.

In another aspect, the invention discloses a rotor. The rotor includes the rotor cooling structure described in any one of the solutions described above, and has all the technical effects described above. Details are not described herein again.

The rotor may be a squirrel-cage rotor, a wound type rotor, or another type of rotor.

In addition, the invention further discloses a motor. The motor has the rotor described above or the rotor cooling structure described in any one of the solutions described above, and has all the technical effects described above. Details are not described herein again.

Heretofore, the technical solutions of the invention have been described with reference to the preferred implementations shown in the accompanying drawings. However, those skilled in the art can readily understand that the scope of protection of the invention is clearly not limited to these specific implementations. Without departing from the principles of the invention, those skilled in the art may make equivalent changes or replacements to related technical features. The technical solutions obtained after these changes or replacements fall within the scope of protection of the invention.

## Claims

1. A rotor cooling structure, **characterized by** comprising:
a rotor shaft, wherein a first channel is formed in the rotor shaft, a first end of the first channel being in communication with an outlet of a coolant supply device; and
rotor cores sleeved on the rotor shaft, wherein third channels and magnetic steel slots are formed in each of the rotor cores, first ends of the third channels being in communication with a second end of the first channel, and second ends of the third channels being in communication with an inlet of the coolant supply device.

2. The rotor cooling structure according to claim **1, characterized in that** the rotor cooling structure further comprises a special-shaped core sleeved on the rotor shaft, wherein a second channel is formed in the special-shaped core, a first end of the second channel being in communication with the second end of the first channel, and a second end of the second channel being in communication with the first ends of the third channels.

3. The rotor cooling structure according to claim 2, **characterized in that** the first channel comprises a first passage, a first end of the first passage being in communication with the outlet of the coolant supply device, and a second end of the first passage being in communication with the first end of the second channel.

4. The rotor cooling structure according to claim 3, **characterized in that** the first channel further comprises a second passage radially formed on an outer peripheral side of the rotor shaft and having a first end in communication with the second end of the first passage and a second end in communication with the first end of the second channel, and the first passage is disposed along an axis of the rotor shaft; or
the first passage is obliquely disposed so that the second end of the first passage is in communication with the first end of the second channel.

5. The rotor cooling structure according to claim 2, **characterized in that** a rotor core is disposed at each of two ends of the special-shaped core.

6. The rotor cooling structure according to claim 5, **characterized in that** the first end of the second channel is in communication with a first shaft hole that is formed in the special-shaped core and that is connected to the rotor shaft, to enable a coolant in the first channel to enter the second channel, and two second ends of the second channel that extend in an axial direction of the special-shaped core each are in communication with the first ends of the third channels in each of the rotor cores.

7. The rotor cooling structure according to claim 6, **characterized in that** each of the third channels comprises heat dissipation holes disposed in an axial direction of the rotor cores, a first end of each of the heat dissipation holes being in communication with the second end of the second channel, and a second end of each of the heat dissipation holes being in communication with the inlet of the coolant supply device; and/or
each of the third channels comprises weight-reducing holes disposed in the axial direction of the rotor cores, a first end of each of the weight-reducing holes being in communication with the second end of the second channel, and a second end of each of the heat dissipation holes being in communication with the inlet of the coolant supply device.

8. The rotor cooling structure according to claim 2, **characterized in that** each of the rotor cores is formed by laminating a plurality of rotor laminations; and/or
the special-shaped core is formed by laminating a plurality of special-shaped laminations; and/or
the special-shaped core is connected to the rotor cores by stamping.

9. A rotor, **characterized by** comprising a rotor cooling structure according to any one of claims 1 to 8.

10. a motor, **characterized by** comprising a rotor cooling structure according to any one of claims 1 to 8, or a rotor according to claim 9.
